# EUROPÄISCHE PATENTSCHRIFT

(11) **EP 1 380 762 B1**
(45) Veröffentlichungstag und Bekanntmachung des Hinweises auf die Patenterteilung: **12.12.2007**
(21) Anmeldenummer: 03014081.8
(22) Anmeldetag: 23.06.2003
(51) Int. Cl.: F16C 13/00, D21G 1/02

(54) **Biegeausgleichswalze mit vormontierter Ölverteilungseinheit im Joch**
Deflection compensating roll with pre-assembled oil supply unit in the yoke
Cylindre à compensation de flexion avec une unité d'alimentation d'huile préassemblée dans le support

(30) Priorität: 10.07.2002 DE 10231207
(43) Veröffentlichungstag der Anmeldung: 14.01.2004
(73) Patentinhaber: Voith Patent GmbH, 89522 Heidenheim (DE)
(72) Erfinder: Schnyder, Eugen, 5622 Waltenschwil (CH); Dornfeld, Peter, 47809 Krefeld (DE)
(74) Vertreter: Manitz, Finsterwald & Partner GbR

(56) Entgegenhaltungen:
- EP-A- 0 342 176
- DE-A- 19 922 365
- DE-A- 19 922 366
- DE-U- 29 520 243
- DE-U- 29 908 069
- US-A- 4 047 273
- US-A- 4 292 716
- US-A- 5 792 036
- US-A- 5 919 121

## Beschreibung

Die Erfindung betrifft eine Biegeausgleichswalze mit einem umlaufenden Walzenmantel, einem den Walzenmantel axial durchsetzenden drehfesten Joch und zwischen dem Joch und dem Walzenmantel angeordneten Stützelementen, die über ein zumindest teilweise in einer axialen Bohrung des Jochs untergebrachtes Leitungssystem mit Druckfluid versorgbar sind, um eine jeweilige Stützkraft auf die Innenseite des Walzenmantels auszuüben. Eine solche Biegeausgleichswalze wird beispielsweise in Press- und Glättpartien von Papiermaschinen eingesetzt.

Bisher wurde in der Regel ein durch eine mehrteilige Konstruktion aus Anker, Trennkolben, Ölzuleitungsrohren und Dichtringen gebildetes Rohrbündel in die betreffende Walze eingebaut, um die erforderliche Ölversorgung der Stützelemente, die erforderliche Kühlölversorgung sowie die erforderliche Rückführung des Betriebsöls sicherzustellen. Das betreffende, in die Zentralbohrung des Jochs der Biegeausgleichswalze eingefügte vormontierte Bauteil ist nun aber relativ instabil. Überdies erfordert eine solche Bauart den Einsatz einer großen Anzahl von Dichtringen, was die Wahrscheinlichkeit von Funktionsstörungen infolge von Leckagen oder einem jeweiligen Überströmen stark erhöht. Darüber hinaus müssen für einen Einsatz in Walzen für große Arbeitsbreiten zwei Bündel verwendet werden, die jeweils die zuvor genannten Funktionen für den betreffenden Walzenbereich erfüllen müssen. Demzufolge ist jeweils eine Ventilstation je Walzenseite erforderlich.

Bei einer aus der EP 0 786 054 B1 bekannten Biegeausgleichswalze der eingangs genannten Art wird eine Vielzahl von Zwischenflanschen in die Zentralbohrung des Jochs eingesetzt, die zur entsprechenden Ölverteilung jeweils so mit einem der Stützelemente sowie der zugeordneten Ölzufuhrleitung verbunden sind, dass das Öl aus der jeweiligen Leitung dem betreffenden Stützelement zugeführt wird. Diese bekannte Walze weist unter anderem den Nachteil auf, dass es leicht zu einer Korrosion insbesondere der betreffenden Bauteile kommen kann.

Eine Biegeausgleichswalze der eingangs genannten Art ist auch aus der EP 0 342 176 A2 bekannt. Bei dieser bekannten Biegeausgleichswalze umfasst das Leitungssystem eine vormontierbare Einheit, die ein in die axiale Bohrung des Jochs einschiebbares Rohr aufweist, in dem von einem Rohrende her kommende, durch Bohrungen in der Rohrwand gebildete Kanäle jeweils bis zu einer axialen Position des Rohres geführt sind, die bei in die axiale Bohrung des Jochs eingesetztem Rohr im Bereich wenigstens eines jeweiligen zu versorgenden Stützelements liegt. Am Außenumfang des Rohres sind axial voneinander beabstandete Umfangsrillen vorgesehen, in die Dichtungen eingesetzt sind, um zwischen dem Rohr und der Innenwand der axialen Bohrung des Jochs gegeneinander abgedichtete, sich in Umfangsrichtung erstreckende Bereiche zu definieren, über die das von einem jeweiligen Kanal gelieferte Druckfluid dem jeweiligen Stützelement zuführbar ist.

Eine Biegeausgleichswalze der eingangs genannten Art ist zudem aus der DE 299 08 069 U1 bekannt. In diesem Fall umfasst das Leitungssystem eine vormontierbare Einheit aus einer Vielzahl von auf einem Zuganker angeordneten Stützscheiben, zwischen den Stützscheiben angeordneten Abstandshaltern und von einem Ende der Einheit her kommenden Rohrleitungen, die jeweils bis zu einer axialen Position durch die Stützscheiben geführt sind, die bei in die axiale Bohrung des Jochs eingesetzter Einheit im Bereich eines jeweiligen zu versorgenden Stützelements liegt. Am Außenumfang der Stützscheiben sind sich in Umfangsrichtung erstreckende Dichtungen vorgesehen, um zwischen den Stützscheiben und der Innenwand der axialen Bohrung des Jochs gegeneinander abgedichtete, sich in Umfangsrichtung erstreckende Bereiche zu definieren, über die das von einer jeweiligen Rohrleitung gelieferte Druckfluid dem jeweiligen Stützelement zuführbar ist. Die einzelnen Stützscheiben können teilweise auch zu einer Doppelstützscheibe zusammengefasst sein, über die mehrere Stützelemente versorgt werden. Die dazu vorgesehenen Rohrleitungen enden jeweils an einem axialen Ende der Doppelstützscheibe.

In der DE 199 22 366 A ist eine Biegeausgleichswalze beschrieben, bei der eine Vielzahl von Einzelrohen zu einem Rohrbündel zusammengefasst sind, das von einer Kunststoffschicht umgeben ist. Das vorgefertigte biegsame Rohrbündel ist in eine in die Zylinderfläche des Jochs eingearbeitete Kehlung eingebracht. In diese Kehlung wird das Rohrbündel über eine im wesentlichen axiale Bohrung des Jochs eingeführt. Ausgehend von der Kehlung erstreckt sich jeweils eine Bohrung zum Druckraum eines jeweiligen Stützelements. Über ein jeweiliges passendes Verbindungsstück wird das einem jeweiligen Stützelement zugeordnete Einzelrohr des Rohrbündels direkt an die zum betreffenden Druckraum führende Bohrung angeschlossen.

Ziel der Erfindung ist es, eine verbesserte Biegeausgleichswalze der eingangs genannten Art zu schaffen, bei der die zuvor genannten Nachteile beseitigt sind.

Diese Aufgabe wird erfindungsgemäß gelöst durch eine Biegeausgleichswalze mit einem umlaufenden Walzenmantel, einem den Walzenmantel axial durchsetzenden drehfesten Joch und zwischen dem Joch und dem Walzenmantel angeordneten Stützelementen, die über ein zumindest teilweise in einer axialen Bohrung des Jochs untergebrachtes Leitungssystem mit Druckfluid versorgbar sind, um eine jeweilige Stützkraft auf die Innenseite des Walzenmantels auszuüben, wobei das Leitungssystem wenigstens eine vormontierbare Einheit umfasst, die ein in die axiale Bohrung des Jochs einschiebbares Hüllrohr aufweist, in dem von einem Hüllrohrende her kommende Rohrleitungen jeweils bis zu einer axialen Position des Hüllrohres geführt sind, die bei in die axiale Bohrung des Jochs eingesetztem Hüllrohr im Bereich wenigstens eines jeweiligen zu versorgenden Stützelements liegt, und wobei am Außenumfang des Hüllrohres sich in Umfangsrichtung erstreckende Stege vorgesehen sind, um zwischen dem Hüllrohr und der Innenwand der axialen Bohrung des Jochs gegeneinander abgedichtete, sich in Umfangsrichtung erstreckende Nuten zu definieren, über die das von einer jeweiligen Rohrleitung gelieferte Druckfluid der jeweiligen wenigstens einen Stützquelle zuführbar ist.

Dabei ist das Hüllrohr vorzugsweise durch ein Stahlrohr gebildet. Es kann also insbesondere durch ein Präzisionsstahlrohr mit allen zur Versorgung der betreffenden Stützelemente erforderlichen Einzelleitungen gebildet sein, das einschließlich der Einzellleitungen als komplette vormontierte Einheit bereitgestellt werden kann, die anschließend in die axiale Bohrung des Jochs eingeschoben wird.

Bevorzugt ist der Außendurchmesser des Hüllrohres zumindest im wesentlichen gleich groß wie der Innendurchmesser der axialen Bohrung des Jochs.

Bei einer bevorzugten praktischen Ausführungsform besitzt der Hüllrohrmantel im Bereich der Nuten jeweils eine Bohrung, in die das Ende der jeweiligen Rohrleitung eingesetzt ist. Dabei ist das Rohrleitungsende in der Bohrung vorzugsweise fixiert. Bei einer bevorzugten praktischen Ausführungsform der erfindungsgemäßen Biegeausgleichswalze ist das Rohrleitungsende in der Bohrung mit dem Hüllrohr verschweißt.

Als Druckfluid ist bevorzugt Öl vorgesehen.

Die vormontierbare Einheit kann überdies beispielsweise auch zumindest eine Rohrleitung für ein Kühlmittel umfassen. Auch eine solche Kühlmittelrohrleitung ist vorzugsweise mit dem Hüllrohr verschweißt. Als Kühlmittel ist vorzugsweise wieder Öl vorgesehen.

Überdies kann die vormontierbare Einheit auch zumindest eine Rohrleitung für den Betriebsfluid- bzw. Betriebsölrückstrom umfassen. Auch eine solche Rückstromrohrleitung ist vorzugsweise wieder mit dem Hüllrohr verschweißt.

Gemäß einer bevorzugten praktischen Ausführungsform der erfindungsgemäßen Biegeausgleichswalze ist die vormontierbare Einheit insgesamt durch eine Schweißkonstruktion gebildet.

Insbesondere zur Vermeidung von Schwingungen kann das Hüllrohr in den zwischen den Rohrleitungen liegenden Bereichen zumindest teilweise, beispielsweise mit Polyurethan oder dergleichen, ausgeschäumt oder mit Kunststoff aufgefüllt oder ausgegossen sein. Die benetzte Oberfläche des Leitungssystems kann z.B. auch mit einem Korrosionsschutz überzogen sein. Es ist beispielsweise auch möglich, die gesamte Einheit aus einem nicht rostenden Stahl zu fertigen.

Zur Abdichtung der Nuten können die Stege an ihrem Außenumfang mit Ringdichtungen versehen sein. Diese können z.B. in entsprechenden Vertiefungen in den Stegen angeordnet sein. Infolge der Abziehbarkeit solcher Dichtungen an den Stegen sind breitere Zonen realisierbar.

Auch die Rohrleitungen können insbesondere wieder aus Stahl bestehen.

Die Nuten können über im Joch vorgesehene allgemein radiale Kanäle mit den Druckräumen der Stützelemente verbunden sein.

Das Druckfluid kann den Stützelementen von nur einem Walzenende her oder auch von beiden Walzenenden her zugeführt sein.

Bei einer zweckmäßigen praktischen Ausführungsform ist nur eine vormontierbare Einheit mit einem sich zumindest im wesentlichen über die gesamte Walzenlänge erstreckenden Hüllrohr vorgesehen.

Grundsätzlich ist jedoch auch eine solche Ausführung denkbar, bei der zwei vormontierbare Einheiten vorgesehen sind, über die das Druckfluid den Stützelementen von dem einen bzw. von dem anderen Walzenende her zuführbar ist und deren beide Hüllrohre sich jeweils nur über einen Teil der Walzenlänge erstrecken.

Bei den Stützelementen kann es sich insbesondere um hydraulische Stützelemente handeln. Über die verschiedenen Nuten kann jeweils ein einzelnes Stützelement oder auch eine Stützelementgruppe mit Druckfluid versorgt werden.

In den Unteransprüchen sind weitere bevorzugte Ausführungsformen der erfindungsgemäßen Biegeausgleichswalze angegeben.

Die Erfindung wird im folgenden anhand von Ausführungsbeispielen unter Bezugnahme auf die Zeichnung näher erläutert; in dieser zeigen:
- Figur 1: eine schematische Längsschnittdarstellung einer Biegeausgleichswalze mit einem Leitungssystem, das zwei vormontierbare Einheiten umfasst, die in zwei getrennte axiale Bohrungen des Jochs eingesetzt sind,
- Figur 2: eine schematische Längsschnittdarstellung einer weiteren Ausführungsform der Biegeausgleichswalze mit einem zwei vormontierbare Einheiten umfassenden Leitungssystem, wobei die beiden vormontierbaren Einheiten jedoch in eine durchgehende axiale Bohrung des Jochs eingesetzt sind,
- Figur 3: eine schematische Längsschnittdarstellung einer weiteren Ausführungsform der Biegeausgleichswalze mit einem Leitungssystem mit lediglich einer in eine durchgehende axiale Bohrung des Jochs eingesetzten vormontierbaren Einheit,
- Figur 4: eine detailliertere schematische Längsschnittdarstellung eines rechten Teils einer Biegeausgleichwalze, bei der den Stützelemente beispielsweise nur vom dargestellten Walzenende her Druckfluid zugeführt wird,
- Figur 5: eine detailliertere schematische Längsschnittdarstellung des linken Teils der Biegeausgleichswalze gemäß Figur 4,
- Figur 6: eine schematische Querschnittsdarstellung der Biegeausgleichswalze gemäß den Figuren 4 und 5, geschnitten entlang der Linien A-A in Figur 4,
- Figur 7: eine schematische Querschnittsdarstellung der Biegeausgleichswalze gemäß den Figuren 4 und 5, geschnitten entlang der Linie B-B in Figur 4,
- Figur 8: eine schematische Querschnittsdarstellung der Biegeausgleichswalze gemäß den Figuren 4 und 5, geschnitten entlang der Linie C-C in Figur 5,
- Figur 9: eine mit der Figur 8 vergleichbare schematische Querschnittsdarstellung einer weiteren Ausführungsform der Biegeausgleichswalze,
- Figur 10: eine schematische Längsschnittdarstellung eines Teils der Darstellung gemäß Figur 9,
- Figur 11: eine schematische Querschnittsdarstellung der Biegeausgleichswalze gemäß den Figuren 4 und 5, geschnitten entlang der Linie D-D in Figur 5, und
- Figur 12: eine schematische Längsschnittdarstellung eines Teils der Darstellung gemäß Figur 11.

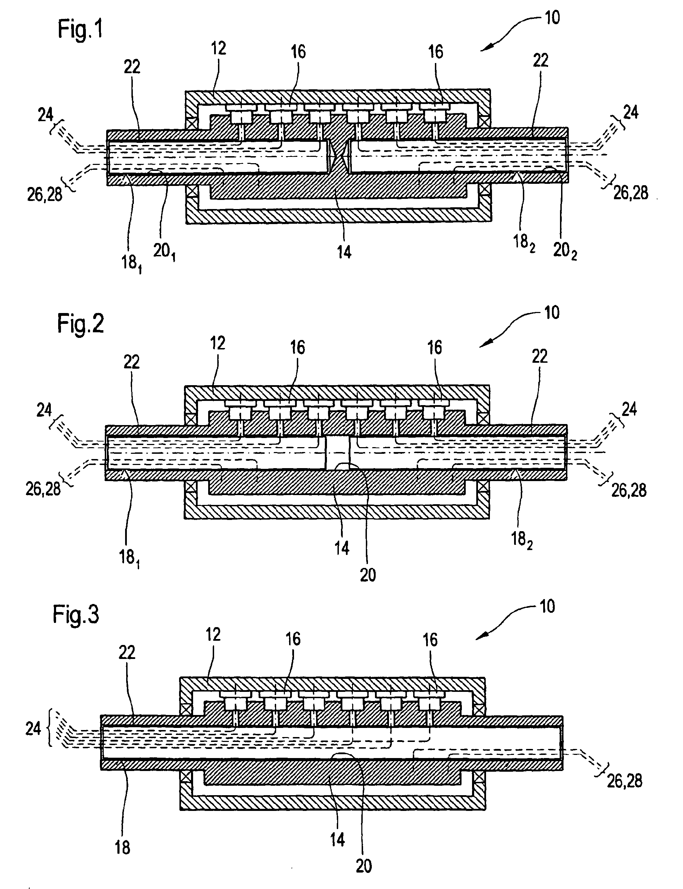

Figur 1 zeigt in schematischer Längsschnittdarstellung eine Biegeausgleichswalze 10, die beispielsweise in einer Press- oder Glättpartie einer Papiermaschine einsetzbar ist.

Die Biegeausgleichswalze 10 umfasst einen umlaufenden Walzenmantel 12, der von einem drehfesten Joch 14 axial durchsetzt ist. Zwischen dem Joch 14 und dem Walzenmantel 12 sind z.B. hydraulische Stützelemente 16 angeordnet, die über ein zumindest teilweise in einer axialen Bohrung des Jochs 14 untergebrachtes Leitungssystem mit Druckfluid, insbesondere Drucköl, versorgbar sind, um eine jeweilige Stützkraft auf die Innenseite des Walzenmantels 12 auszuüben.

Beim vorliegenden Ausführungsbeispiel umfasst das Leitungssystem zwei vormontierbare Einheiten 18₁, 18₂, die von den beiden Walzenenden her jeweils in eine axiale Bohrung 20₁ bzw. 20₂ des Jochs 14 einschiebbar sind. Im vorliegenden Fall sind zwei voneinander getrennte Sackbohrungen 20₁, 20₂ vorgesehen.

Die beiden vormontierbaren Einheiten 18₁, 18₂ weisen jeweils ein in die betreffende axiale Bohrung 20₁ bzw. 20₂ des Jochs 14 einschiebbares Hüllrohr 22 auf, in dem vom jeweiligen äußeren Hüllrohrende her kommende Rohrleitungen 24 jeweils bis zu einer axialen Position des Hüllrohres 22₁ bzw. 22₂ geführt sind, die nach einem Einschieben der Hüllrohre in die axialen Bohrungen im Bereich eines jeweiligen zu versorgenden Stützelements 16 liegt.

Bei dem über die Rohrleitungen 24 zugeführten Druckfluid kann es sich insbesondere um Öl handeln.

Die beiden vormontierbaren Einheiten 18₁ bzw. 18₂ umfassen überdies jeweils zumindest eine Rohrleitung 26 für ein Kühlmittel, insbesondere wieder Öl, und zumindest eine Rohrleitung 28 für den Betriebsfluid- bzw. Betriebsölrückstrom.

Im vorliegenden Fall ergibt sich eine symmetrische Rohrleitungsanordnung mit einer Betriebsölversorgung der Stützelemente 16 von beiden Walzenenden her.

Die Ausführungsform gemäß Figur 2 unterscheidet sich von der der Figur 1 im wesentlichen nur dadurch, dass das Joch 14 eine durchgehende axiale Bohrung 20 besitzt und die beiden vormontierbaren Einheiten 18₁, 18₂ in diese eine durchgehende axiale Bohrung 20 eingesetzt sind. Einander entsprechenden Teilen sind gleiche Bezugszeichen zugeordnet.

Figur 3 zeigt in schematischer Längsschnittdarstellung eine weitere Ausführungsform der Biegeausgleichswalze 10. Im vorliegenden Fall umfasst das Leitungssystem nur eine vormontierbare Einheit 18. Diese ist in eine durchgehende axiale Bohrung 20 des Jochs 14 eingeschoben.

Wie anhand der Figur 3 zu erkennen ist, wird den Stützelementen 16 das Druckfluid über die Rohrleitungen 24 nur vom linken Walzenende her zugeführt, während die Rohrleitungen 26, 28, die insbesondere der Zuführung des Kühlmittels und der Betriebsfluid- bzw. Betriebsölrückführung dienen können, aus dem anderen Walzenende herausgeführt sind. Im vorliegenden Fall ergibt sich somit eine asymmetrische Rohrleitungsanordnung.

Im übrigen kann die Biegeausgleichswalze 10 zumindest im wesentlichen wieder den gleichen Aufbau wie beispielsweise die in der Figur 2 gezeigte Walze besitzen. Einander entsprechenden Teilen sind gleiche Bezugszeichen zugeordnet.

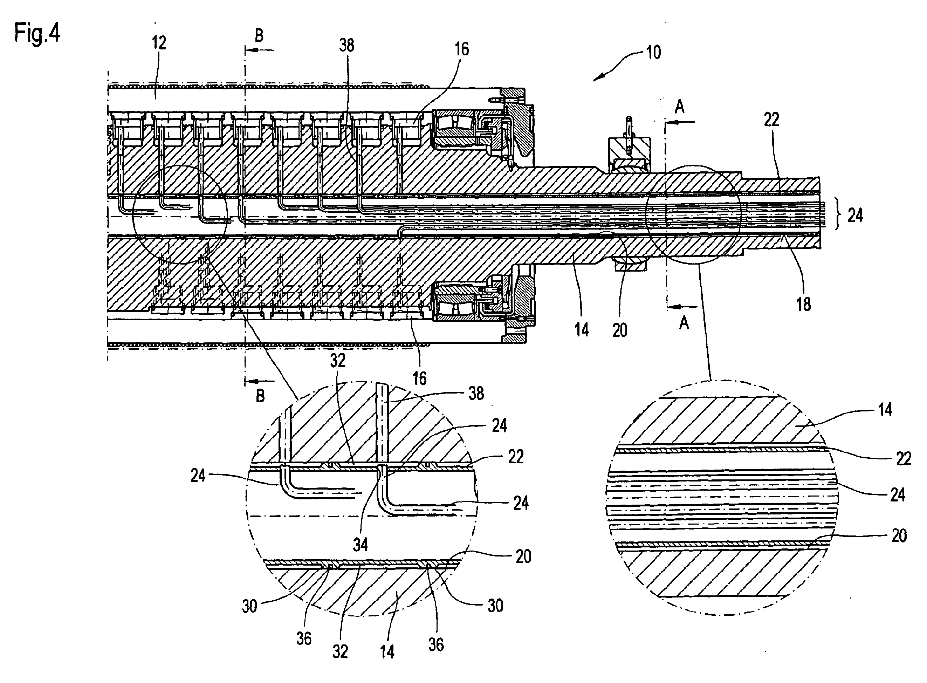

Weitergehende Ausgestaltungsmöglichkeiten der jeweiligen Leitungssysteme und insbesondere der jeweiligen vormontierbaren Einheiten ergeben sich beispielsweise aus den Darstellung der Figuren 4 bis 12, in denen rein beispielhaft wieder eine Biegeausgleichswalze 10 mit einer asymmetrischen Rohrleitungsanordnung dargestellt ist. So werden hier die Stützelemente 16 beispielsweise wieder nur von einem Walzenende her mit Druckfluid versorgt.

Figur 4 zeigt in einer detaillierteren schematischen Längsschnittdarstellung einen rechten Teil der betreffenden Biegeausgleichswalze 10. Dabei werden die Stützelemente 12 von dem in dieser Figur 4 dargestellten Walzenende her über die Rohrleitungen 24 mit Druckfluid versorgt.

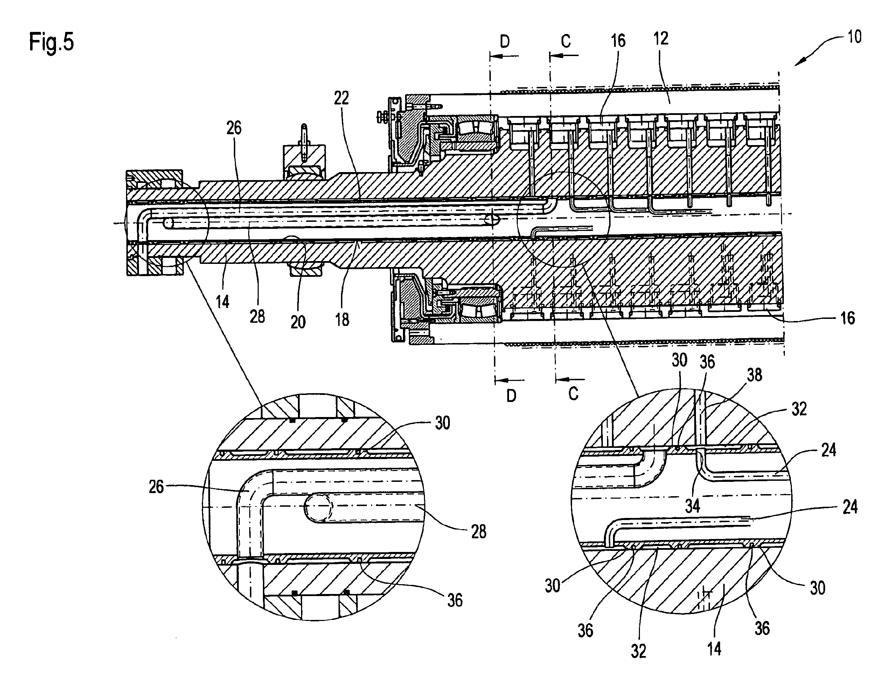

Figur 5 zeigt in detaillierterer schematischer Längsschnittdarstellung einen linken Teil der betreffenden Biegeausgleichswalze 12. Aus dem in dieser Figur 5 dargestellten Walzenende werden lediglich die Rohrleitungen 26, 28 für die Zufuhr des Kühlmittels bzw. den Betriebsfluid- bzw. Betriebsölrückstrom herausgeführt.

In den Figuren 4 und 5 sind unten jeweils einzelne Abschnitte der vormontierbaren Einheit 18 sowie des angrenzenden Jochbereichs in vergrößerter Darstellung wiedergegeben.

Die innerhalb des Hüllrohres 22 verlaufenden Leitungen können zumindest teilweise beispielsweise durch Verschweißen, Aufbördeln, Verpressen und/oder dergleichen mit dem Hüllrohr 22 verbunden sein.

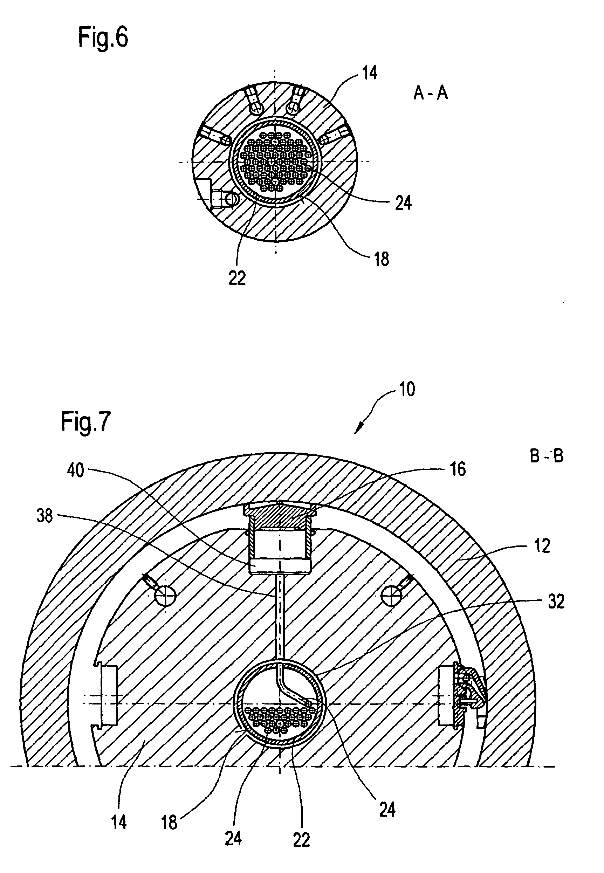

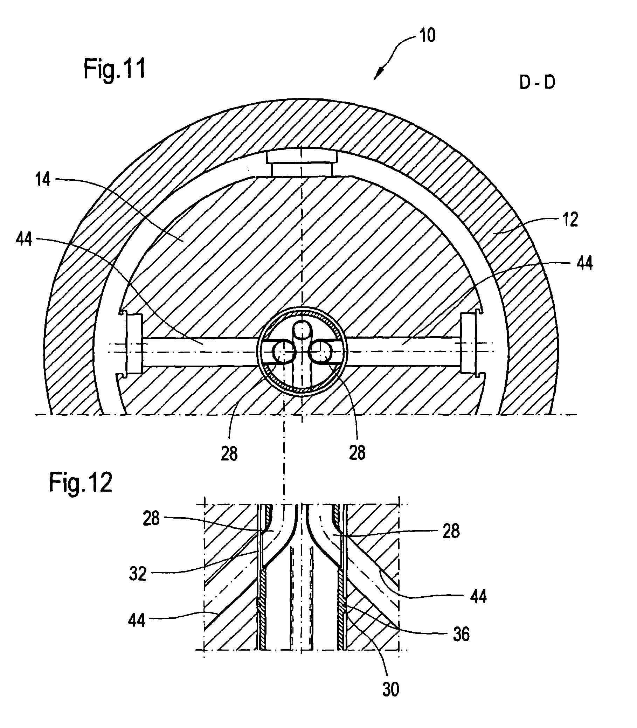

Die Figuren 6 bis 8 und 11 zeigen die Biegeausgleichswalze 10 gemäß den Figuren 4 und 5 in schematischen Querschnittsdarstellungen entlang der Linien A-A bis D-D. Figur 12 zeigt in schematischer Längsschnittdarstellung einen Teil der Darstellung gemäß Figur 11.

Im vorliegenden Fall ist beispielsweise wieder nur eine vormontierbare Einheit 18 vorgesehen. Diese weist wieder ein in eine durchgehende axiale Bohrung 20 des Jochs 14 einschiebbares Hüllrohr 22 auf. In diesem Hüllrohr 22 sind im vorliegenden Fall ausschließlich vom rechten Hüllrohrende her kommende Rohrleitungen 24 jeweils bis zu einer axialen Position des Hüllrohres 22 geführt, die bei in die axiale Bohrung 20 des Jochs 14 eingesetztem Hüllrohr 22 im Bereich eines jeweiligen zu versorgenden Stützelements 16 liegt. Wie insbesondere anhand der Figuren 4 und 5 zu erkennen ist, können beispielsweise auch auf zwei einander gegenüberliegenden Seiten des Jochs 14 über die Rohrleitungen 24 zu versorgende Stützelemente 16 vorgesehen sein.

Am Außenumfang des Hüllrohres 22 sind sich in Umfangsrichtung erstreckende Stege 30 vorgesehen, um zwischen dem Hüllrohr 22 und der Innenwand der axialen Bohrung 20 des Jochs 14 gegeneinander abgedichtete, sich in Umfangsrichtung erstreckende Nuten 32 zu definieren, über die das von einer jeweiligen Rohrleitung 24 gelieferte Druckfluid dem jeweiligen hydraulischen Stützelement 16 zuführbar ist (vgl. insbesondere die Figuren 4 und 5).

Das Hüllrohr 22 kann insbesondere durch ein Stahlrohr gebildet sein. Es kann somit beispielsweise ein Präzisionsstahlrohr mit allen zur Versorgung der Stützelemente 16 erforderlichen einzelnen Rohrleitungen 24 als vormontierte Einheit bereitgestellt werden.

Wie insbesondere wieder anhand der Figuren 4 und 5 zu erkennen ist, ist der Aussendruchmesser des Hüllrohres 22 zumindest im wesentlichen gleich groß wie der Innendurchmesser der axialen Bohrung 20 des Jochs 14.

Wie bereits erwähnt, umfasst im vorliegenden Fall die eine vormontierbare Einheit 18 sämtliche zur Versorgung der betreffenden Stützelemente 16 erforderlichen Rohrleitungen 24.

Im Bereich der Nuten 32 besitzt der Hüllrohrmantel jeweils eine Bohrung 34, in die das Ende einer jeweiligen Rohrleitung 24 eingesetzt ist (vgl. insbesondere die Figuren 4 und 5). Sind beispielsweise auf zwei einander gegenüberliegenden Seiten des Jochs 14 Stützelemente 16 vorgesehen, so ist zur Versorgung jedes Stützelements 16 über eine jeweilige Leitung 24 jeweils eine solche Bohrung 34 vorgesehen. Gegebenenfalls kann eine jeweilige Nut 32 in Umfangsrichtung unterteilt sein, d.h. gegeneinander abgedichtete Abschnitte aufweisen.

Wie insbesondere wieder anhand der Figuren 4 und 5 zu erkennen ist, verlaufen die Rohrleitungen 24 vom betreffenden Hüllrohrende her zunächst axial. An ihren Enden sind sie dann jeweils um z.B. 90° zur betreffenden Bohrung 34 im Hüllrohrmantel hin abgebogen.

Die Rohrleitungsenden sind in der jeweiligen Bohrung 34 jeweils fixiert. Dabei kann das jeweilige Rohrleitungsende in der Bohrung 34 mit dem Hüllrohr 22 insbesondere verschweißt sein.

Wie insbesondere anhand der Figur 5 zu erkennen ist, umfasst die vormontierte Einheit 18 überdies zumindest eine Rohrleitung 26 für ein Kühlmittel, insbesondere Öl, sowie zumindest eine Rohrleitung 28 für den Betriebsmittelfluid- bzw. Betriebsölrückstrom. Auch diese Rohrleitungen 26, 28 können mit dem Hüllrohr 22 insbesondere wieder verschweißt sein. Die vormontierbare Einheit 18 kann somit insgesamt durch eine Schweißkonstruktion gebildet sein. Wie insbesondere anhand des rechten unteren Teils der Figur 5 zu erkennen ist, können auch diese Rohrleitungen beispielsweise wieder in zwischen Stegen 30 definierte Nuten 32 münden.

Insbesondere zur Vermeidung von Schwingungen kann das Hüllrohr in den zwischen den Rohrleitungen 24, 26, 28 liegenden Bereichen zumindest teilweise, z.B. mit Polyurethan, ausgeschäumt oder mit Kunststoff aufgefüllt oder ausgegossen sein.

Zur Abdichtung der Nuten 32 sind die Stege 30 an ihrem Außenumfang mit Ringdichtungen 36 bzw. Kolbendichtringen versehen (vgl. insbesondere wieder die Figuren 4 und 5).

Auch die Rohrleitungen 24, 26, 28 können insbesondere wieder aus Stahl bestehen.

Die der Versorgung der Stützelemente 16 dienenden Nuten 32 sind über im Joch 14 vorgesehene allgemein radiale Kanäle 38 mit den Druckräumen der Stützelemente 16 verbunden (vgl. insbesondere die Figuren 4 und 5).

Wie anhand der Figuren 4 und 5 zu erkennen ist, erstreckt sich das Hüllrohr 22 der vormontierbaren Einheit 18 zumindest über die Länge des Walzenmantels 12, wobei es sich beispielsweise zumindest im wesentlichen über die gesamte Länge des Jochs 14 erstrecken kann.

Wie anhand der Figur 6 zu erkennen ist, ist das Hüllrohr 22 im Eintrittsbereich noch relativ dicht mit Rohrleitungen 24 bepackt. Dabei kann zumindest im wesentlichen der gesamte Innenquerschnitt des Hüllrohres 22 mit Rohrleitungen 24 ausgefüllt sein.

In der Schnittdarstellung gemäß Figur 7 fehlt bereits ein großer Teil der Leitungen 24, nachdem diese bereits zuvor zu den betreffenden Stützelementen 16 abgebogen wurden (vgl. auch Figur 4).

Überdies zeigt die Figur 7 beispielhaft ein Stützelement 16, dessen Druckraum 38 über den betreffenden, im Joch 14 vorgesehenen Kanal 38 mit der betreffenden Nut 32 verbunden ist, die über die zugeordnete Rohrleitung 24 mit Druckfluid gespeist wird.

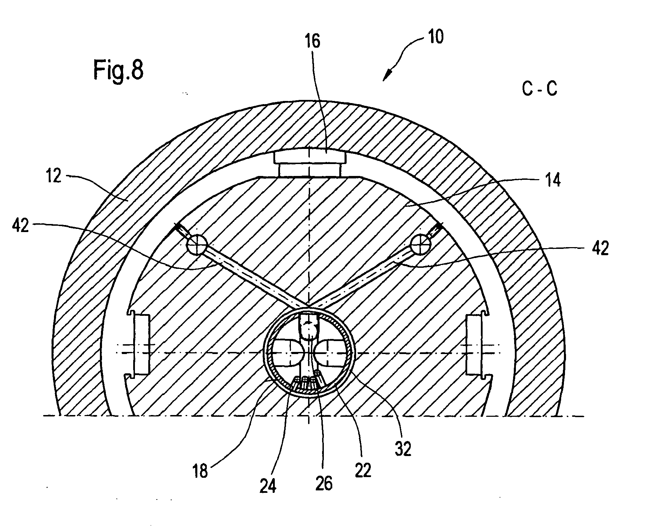

In der Schnittdarstellung gemäß Figur 8 ist außer einigen noch verbleibenden Rohrleitungen 24 zur Versorgung von Stützelementen unter anderem insbesondere auch eine Kühlmittelrohrleitung 26 zu erkennen. Das von dieser Kühlmittelrohrleitung 26 stammende Kühlmittel, insbesondere Öl, kann beispielsweise über im Joch 14 vorgesehene Kanäle 42 weitergeleitet werden.

Dabei kann das von der Kühlmittelrohrleitung 26 stammende Kühlmittel beispielsweise wieder über eine durch Stege 30 bzw. zugeordnete Ringdichtungen 36 abgedichtete Nut 32 den Kanälen 42 zugeführt werden (vgl. insbesondere auch Figur 5).

In den Figuren 11 und 12 sind unter anderem zwei Rohrleitungen 28 für den Betriebsfluid- bzw. Betriebsölrückstrom zu erkennen. Auch diese Rohrleitungen 28 sind wieder über eine durch Stege 30 bzw. zugeordnete Ringdichtungen 36 abgedichtete Nut 32 mit im Joch 14 vorgesehenen Kanälen 44 verbunden.

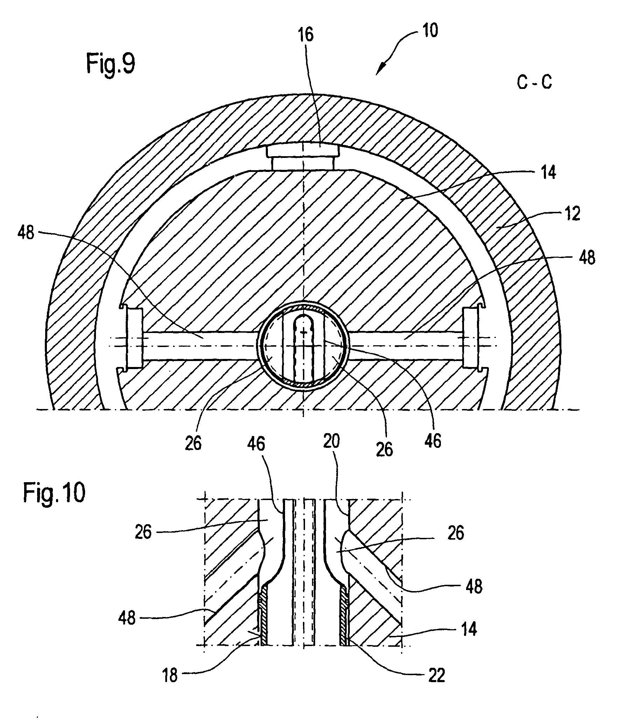

Die Figuren 9 und 10 zeigen eine mit der Figur 8 vergleichbare schematische Querschnittsdarstellung einer weiteren Ausführungsform der Biegeausgleichswalze 10, bei der die Kühlmittelrohrleitung 26 in einem sich an das Hüllrohr 22 anschließenden Bereich zwischen der Innenwand der axialen Bohrung 20 des Jochs 14 und einer Wandung 46 gebildet ist. Auch im vorliegenden Fall wird das Kühlmittel wieder über im Joch 14 vorgesehene Kanäle 48 weitergeleitet.

Auch bei den in den Figuren 4 bis 12 dargestellten Ausführungsformen wird Druckfluid für die Stützelemente 16 ebenso wie bei der Ausführungsform gemäß Figur 3 wieder nur von einem Walzenende her zugeführt, so dass hier nur auf einer der beiden Walzenseiten eine Ventilstation beigestellt werden muss. Demgegenüber sind bei den symmetrischen Rohrleitungsanordnungen der in den Figuren 1 und 2 gezeigten Ausführungsformen beidseitig Ventilstationen erforderlich.

### Bezugszeichenliste

- 10: Biegeausgleichswalze
- 12: Walzenmantel
- 14: Joch
- 16: Stützelement
- 18: vormontierte Einheit
- 20: axiale Bohrung
- 22: Hüllrohr
- 24: Rohrleitung zur Stützelementversorgung
- 26: Kühlmittelrohrleitung
- 28: Rohrleitung für den Betriebsfluid- bzw. Betriebölrückstrom
- 30: Steg
- 32: Nut
- 34: Bohrung
- 36: Ringdichtung
- 38: Kanal
- 40: Druckraum
- 42: Kanal
- 44: Kanal
- 46: Wandung
- 48: Kanal

## Patentansprüche

1. Biegeausgleichswalze (10) mit einem umlaufenden Walzenmantel (12), einem den Walzenmantel (12) axial durchsetzenden drehfesten Joch (14) und zwischen dem Joch (14) und dem Walzenmantel (12) angeordneten Stützelementen (16), die über ein zumindest teilweise in einer axialen Bohrung des Jochs (14) untergebrachtes Leitungssystem mit Druckfluid versorgbar sind, um eine jeweilige Stützkraft auf die Innenseite des Walzenmantels (12) auszuüben, wobei das Leitungssystem wenigstens eine vormontierbare Einheit (18) umfasst, die ein in die axiale Bohrung (20) des Jochs (14) einschiebbares Hüllrohr (22) aufweist, in dem von einem Hüllrohrende her kommende Rohrleitungen (24) jeweils bis zu einer axialen Position des Hüllrohres (22) geführt sind, die bei in die axiale Bohrung (20) des Jochs (14) eingesetztem Hüllrohr (22) im Bereich wenigstens eines jeweiligen zu versorgenden Stützelements (16) liegt, und wobei am Außenumfang des Hüllrohres (22) sich in Umfangsrichtung erstreckende Stege (30) vorgesehen sind, um zwischen dem Hüllrohr (22) und der Innenwand der axialen Bohrung (20) des Jochs (14) gegeneinander abgedichtete, sich in Umfangsrichtung erstreckende Nuten (32) zu definieren, über die das von einer jeweiligen Rohrleitung gelieferte Druckfluid dem jeweiligen wenigstens einen Stützelement (16) zuführbar ist.

2. Biegeausgleichswalze nach Anspruch 1,
**dadurch gekennzeichnet,**
**dass** das Hüllrohr (22) durch ein Stahlrohr gebildet ist.

3. Biegeausgleichswalze nach Anspruch 1 oder 2,
**dadurch gekennzeichnet,**
**dass** der Außendurchmesser des Hüllrohres (22) zumindest im Wesentlichen gleich groß ist wie der Innendurchmesser der axialen Bohrung (20) des Jochs (14).

4. Biegeausgleichswalze nach einem der vorhergehenden Ansprüche,
**dadurch gekennzeichnet,**
**dass** die vormontierbare Einheit (18) alle zur Versorgung der betreffenden Stützelemente (16) erforderlichen Rohrleitungen (24) umfasst.

5. Biegeausgleichswalze nach einem der vorhergehenden Ansprüche,
**dadurch gekennzeichnet,**
**dass** der Hüllrohrmantel im Bereich der Nuten (32) jeweils eine Bohrung (34) aufweist, in die das Ende der jeweiligen Rohrleitung (24) eingesetzt ist.

6. Biegeausgleichswalze nach Anspruch 5,
**dadurch gekennzeichnet,**
**dass** das Rohrleitungsende in der Bohrung (34) fixiert ist.

7. Biegeausgleichswalze nach Anspruch 6,
**dadurch gekennzeichnet,**
**dass** das Rohrleitungsende in der Bohrung (34) mit dem Hüllrohr (22) verschweißt ist.

8. Biegeausgleichswalze nach einem der vorhergehenden Ansprüche,
**dadurch gekennzeichnet,**
**dass** als Druckfluid Öl vorgesehen ist.

9. Biegeausgleichswalze nach einem der vorhergehenden Ansprüche,
**dadurch gekennzeichnet,**
**dass** die vormontierbare Einheit (18) überdies zumindest eine Rohrleitung (26) für ein Kühlmittel umfasst.

10. Biegeausgleichswalze nach Anspruch 9,
**dadurch gekennzeichnet,**
**dass** die Kühlmittelrohrleitung (26) mit dem Hüllrohr (22) verschweißt ist.

11. Biegeausgleichswalze nach Anspruch 9 oder 10,
**dadurch gekennzeichnet,**
**dass** als Kühlmittel Öl vorgesehen ist.

12. Biegeausgleichswalze nach einem der vorhergehenden Ansprüche,
**dadurch gekennzeichnet,**
**dass** die vormontierbare Einheit überdies zumindest eine Rohrleitung (28) für den Betriebsfluid- bzw. Betriebsölrückstrom umfasst.

13. Biegeausgleichswalze nach Anspruch 12,
**dadurch gekennzeichnet,**
**dass** die Rückstromrohrleitung (28) mit dem Hüllrohr (22) verschweißt ist.

14. Biegeausgleichswalze nach einem der vorhergehenden Ansprüche,
**dadurch gekennzeichnet,**
**dass** die vormontierbare Einheit (18) insgesamt durch eine Schweißkonstruktion gebildet ist.

15. Biegeausgleichswalze nach einem der vorhergehenden Ansprüche,
**dadurch gekennzeichnet,**
**dass** das Hüllrohr (22) in den zwischen den Rohrleitungen (24, 26, 28) liegenden Bereichen zumindest teilweise ausgeschäumt ist.

16. Biegeausgleichswalze nach Anspruch 15,
**dadurch gekennzeichnet,**
**dass** die betreffenden Zwischenbereiche mit Polyurethan ausgeschäumt sind.

17. Biegeausgleichswalze nach einem der Ansprüche 1 bis 14,
**dadurch gekennzeichnet,**
**dass** das Hüllrohr (22) in den zwischen den Rohrleitungen (24, 26, 28) liegenden Bereichen zumindest teilweise mit Kunststoff aufgefüllt oder ausgegossen ist.

18. Biegeausgleichswalze nach einem der vorhergehenden Ansprüche,
**dadurch gekennzeichnet,**
**dass** zur Abdichtung der Nuten (32) die Stege (30) an ihrem Außenumfang mit Ringdichtungen (36) versehen sind.

19. Biegeausgleichswalze nach einem der vorhergehenden Ansprüche,
**dadurch gekennzeichnet,**
**dass** die Rohrleitungen (24, 26, 28) aus Stahl bestehen.

20. Biegeausgleichswalze nach einem der vorhergehenden Ansprüche,
**dadurch gekennzeichnet,**
**dass** die Nuten (32) über im Joch (14) vorgesehene allgemein radiale Kanäle (38) mit den Druckräumen der Stützelemente (16) verbunden sind.

21. Biegeausgleichswalze nach einem der vorhergehenden Ansprüche,
**dadurch gekennzeichnet,**
**dass** das Druckfluid den Stützelementen (16) von nur einem Walzenende her zugeführt ist.

22. Biegeausgleichswalze nach einem der Ansprüche 1 bis 20,
**dadurch gekennzeichnet,**
**dass** das Druckfluid den Stützelementen (16) von beiden Walzenenden her zugeführt ist.

23. Biegeausgleichswalze nach einem der vorhergehenden Ansprüche,
**dadurch gekennzeichnet,**
**dass** nur eine vormontierbare Einheit (18) mit einem sich zumindest im Wesentlichen über die gesamte Walzenlänge erstreckenden Hüllrohr (22) vorgesehen ist.

24. Biegeausgleichswalze nach einem der Ansprüche 1 bis 22,
**dadurch gekennzeichnet,**
**dass** zwei vormontierbare Einheiten (18₁, 18₂) vorgesehen sind, über die das Druckfluid den Stützelementen (16) von dem einen bzw. von dem anderen Walzenende her zuführbar ist und deren beide Hüllrohre (22) sich jeweils nur über einen Teil der Walzenlänge erstrecken.

## Claims

1. A deflection compensating roll (10) with a peripheral roll jacket (12), a rotationally fixed yoke (14) axially passing through the roll jacket (12) and support elements (16) which are arranged between the yoke (14) and the roll jacket (12) and which can be supplied with pressure fluid via a line system which is at least partly accommodated in an axial bore of the yoke (14) to exert a respective supporting force on the inner side of the roll jacket (12), with the line system including at least one pre-installable unit (18) which has a sheath (22) which is insertable into the axial bore (20) of the yoke (14) and in which pipe lines (24) coming from an end of the sheath are in each case guided up to an axial position of the sheath (22) which is disposed in the region of at least one respective support element (16) to be supplied, when the sheath (22) is inserted into the axial bore (20) of the yoke (14), and with webs (30) extending in the peripheral direction being provided at the outer periphery of the sheath (22) to define mutually sealed grooves (32) which extend in the peripheral direction between the sheath (22) and the inner wall of the axial bore (20) of the yoke (14) and via which the pressure fluid supplied from a respective pipe line can be supplied to the respective at least one support element (16).

2. A deflection compensating roll in accordance with claim 1, **characterised in that** the sheath (22) is formed by a steel pipe.

3. A deflection compensating roll in accordance with claim 1 or claim 2, **characterised in that** the outer diameter of the sheath (22) is at least substantially of the same size as the inner diameter of the axial bore (20) of the yoke (14).

4. A deflection compensating roll in accordance with any one of the preceding claims, **characterised in that** the pre-installable unit (18) includes all the pipe lines (24) required for the supply of the respective support elements (16).

5. A deflection compensating roll in accordance with any one of the preceding claims, **characterised in that** the sheath jacket has a respective bore (34) in the region of the grooves (32) into which the end of the respective pipe line (24) is inserted.

6. A deflection compensating roll in accordance with claim 5,
**characterised in that** the pipe line end is fixed in the bore (34).

7. A deflection compensating roll in accordance with claim 6,
**characterised in that** the pipe line end is welded to the sheath (22) in the bore (34).

8. A deflection compensating roll in accordance with any one of the preceding claims, **characterised in that** oil is provided as the pressure fluid.

9. A deflection compensating roll in accordance with any one of the preceding claims, **characterised in that** the pre-installable unit (18) moreover includes at least one pipe line (26) for a coolant.

10. A deflection compensating roll in accordance with claim 9,
**characterised in that** the coolant pipe line (26) is welded to the sheath (22).

11. A deflection compensating roll in accordance with claim 9 or claim 10, **characterised in that** oil is provided as the coolant.

12. A deflection compensating roll in accordance with any one of the preceding claims, **characterised in that** the pre-installable unit moreover includes at least one pipe line (28) for the operating fluid or the operating oil backflow.

13. A deflection compensating roll in accordance with claim 12,
**characterised in that** the backflow pipe line (28) is welded to the sheath (22).

14. A deflection compensating roll in accordance with any one of the preceding claims, **characterised in that** the pre-installable unit (18) is formed overall by a welding construction.

15. A deflection compensating roll in accordance with any one of the preceding claims, **characterised in that** the sheath (22) is at least partly foamed in the regions disposed between the pipe lines (24, 26, 28).

16. A deflection compensating roll in accordance with claim 15, **characterised in that** the respective intermediate regions are foamed with polyurethane.

17. A deflection compensating roll in accordance with any one of the claims 1 to 14, **characterised in that** the sheath (22) is at least partly filled or cast with plastic in the regions disposed between the pipe lines (24, 26, 28).

18. A deflection compensating roll in accordance with any one of the preceding claims, **characterised in that** the webs (30) are provided with ring seals (36) at their outer periphery for the sealing of the grooves (32).

19. A deflection compensating roll in accordance with any one of the preceding claims, **characterised in that** the pipe lines (24, 26, 28) are made of steel.

20. A deflection compensating roll in accordance with any one of the preceding claims, **characterised in that** the grooves (32) are connected to the pressure spaces of the support elements (16) via generally radial passages (38) provided in the yoke (14).

21. A deflection compensating roll in accordance with any one of the preceding claims, **characterised in that** the pressure fluid is supplied to the support elements (16) from only one roll end.

22. A deflection compensating roll in accordance with any one of the claims 1 to 20, **characterised in that** the pressure fluid is supplied to the support elements (16) from both roll ends.

23. A deflection compensating roll in accordance with any one of the preceding claims, **characterised in that** only one pre-installable unit (18) is provided with a sheath (22) extending at least substantially over the total roll length.

24. A deflection compensating roll in accordance with any one of the claims 1 to 22, **characterised in that** two pre-installable units (18₁,18₂) are provided via which the pressure fluid can be supplied to the support elements (16) from the one or from the other roll end and their two sheaths (22) each extend only over a part of the roll length.

## Revendications

1. Cylindre à compensation de flexion (10) comprenant une chemise de cylindre périphérique (12), un support (14) solidaire en rotation et traversant axialement la chemise de cylindre (12) et des éléments de soutien (16) agencés entre le support (14) et la chemise de cylindre (12), lesquels peuvent être alimentés en fluide sous pression via un système de conduites logé au moins partiellement dans un perçage axial du support (14) afin d'exercer des forces de soutien respectives sur la face intérieure de la chemise de cylindre (12), ledit système de conduites comprenant au moins une unité préassemblée (18) qui comprend un tube enveloppe (22) susceptible d'être enfilé dans le perçage axial (20) du support (14), dans lequel des conduites tubulaires (24) qui viennent depuis l'une des extrémités du tube enveloppe sont guidées jusqu'à une position axiale du tube enveloppe (22) qui, lorsque que le tube enveloppe (22) est mis en place dans le perçage axial (20) du support (14), est située dans la zone d'au moins un élément de soutien (16) respectif à alimenter, et dans lequel sont prévues des barrettes (30) qui s'étendent en direction périphérique à la périphérie extérieure du tube enveloppe (22), afin de définir, entre le tube enveloppe (22) et la paroi intérieure du perçage axial (20) du support (14), des gorges (32) étanchées les unes par rapport aux autres et s'étendant en direction périphérique, via lesquelles le fluide sous pression fourni par une conduite tubulaire respective peut être amené audit au moins un élément de soutien respectif (16).

2. Cylindre à compensation de flexion selon la revendication 1,
**caractérisé en ce que** le tube enveloppe (22) est formé par un tube en acier.

3. Cylindre à compensation de flexion selon la revendication 1 ou 2,
**caractérisé en ce que** le diamètre extérieur du tube enveloppe (22) est au moins sensiblement égal au diamètre intérieur du perçage axial (20) du support (14).

4. Cylindre à compensation de flexion selon l'une des revendications précédentes,
**caractérisé en ce que** l'unité préassemblée (18) comprend toutes les conduites tubulaires (24) nécessaires pour l'alimentation des éléments de soutien concernés (16).

5. Cylindre à compensation de flexion selon l'une des revendications précédentes,
**caractérisé en ce que** l'enveloppe du tube enveloppe comporte, dans la région des gorges (32), un perçage respectif (34) dans lequel est mise en place l'extrémité de la conduite tubulaire respective (24).

6. Cylindre à compensation de flexion selon la revendication 5,
**caractérisé en ce que** l'extrémité de la conduite tubulaire est fixée dans le perçage (34).

7. Cylindre à compensation de flexion selon la revendication 6,
**caractérisé en ce que** l'extrémité de la conduite tubulaire est soudée dans le perçage (34) avec le tube enveloppe (22).

8. Cylindre à compensation de flexion selon l'une des revendications précédentes,
**caractérisé en ce qu'**il est prévu de l'huile à titre de fluide sous pression.

9. Cylindre à compensation de flexion selon l'une des revendications précédentes,
**caractérisé en ce que** l'unité préassemblée (18) comprend en outre au moins une conduite tubulaire (26) pour un agent de refroidissement.

10. Cylindre à compensation de flexion selon la revendication 9,
**caractérisé en ce que** la conduite tubulaire (26) de refroidissement est soudée avec le tube enveloppe (22).

11. Cylindre à compensation de flexion selon la revendication 9 ou 10,
**caractérisé en ce qu'**il est prévu de l'huile à titre d'agent de refroidissement.

12. Cylindre à compensation de flexion selon l'une des revendications précédentes,
**caractérisé en ce que** l'unité préassemblée comprend en outre au moins une conduite tubulaire (28) pour l'écoulement en retour du fluide ou de l'huile de fonctionnement.

13. Cylindre à compensation de flexion selon la revendication 12,
**caractérisé en ce que** la conduite tubulaire de retour (28) est soudée avec le tube enveloppe (22).

14. Cylindre à compensation de flexion selon l'une des revendications précédentes,
**caractérisé en ce que** l'unité préassemblée (18) est formée dans son ensemble par une construction soudée.

15. Cylindre à compensation de flexion selon l'une des revendications précédentes,
**caractérisé en ce que** le tube enveloppe (22) est enrobé par moussage au moins partiellement dans les zones situées entre les conduites tubulaires (24, 26, 28).

16. Cylindre à compensation de flexion selon la revendication 15,
**caractérisé en ce que** les zones intermédiaires concernées sont enrobées par moussage avec du polyuréthane.

17. Cylindre à compensation de flexion selon les revendications 1 à 14,
**caractérisé en ce que** le tube enveloppe (22) est rempli ou garni au moins partiellement de matière plastique dans les zones situées entre les conduites tubulaires (24, 26, 28).

18. Cylindre à compensation de flexion selon l'une des revendications précédentes,
**caractérisé en ce que**, pour étancher les gorges (32), les barrettes (30) sont pourvues à leur périphérie extérieure de joints d'étanchéité annulaires (36).

19. Cylindre à compensation de flexion selon l'une des revendications précédentes,
**caractérisé en ce que** les conduites tubulaires (24, 26, 28) sont en acier.

20. Cylindre à compensation de flexion selon l'une des revendications précédentes,
**caractérisé en ce que** les gorges (32) sont reliées aux chambres de pression des éléments de soutien (16) via des canaux (38) généralement radiaux prévus dans le support (14).

21. Cylindre à compensation de flexion selon l'une des revendications précédentes,
**caractérisé en ce que** le fluide sous pression est amené aux éléments de soutien (16) uniquement depuis une extrémité du cylindre.

22. Cylindre à compensation de flexion selon l'une des revendications 1 à 20,
**caractérisé en ce que** le fluide sous pression est amené aux éléments de soutien (16) depuis les deux extrémités du cylindre.

23. Cylindre à compensation de flexion selon l'une des revendications précédentes,
**caractérisé en ce qu'**il n'est prévu que une unité préassemblée (18) avec un tube enveloppe (22) qui s'étend au moins essentiellement sur la totalité de la longueur du cylindre.

24. Cylindre à compensation de flexion selon l'une des revendications 1 à 22,
**caractérisé en ce qu'**il est prévu deux unités préassemblées (18₁, 18₂), via lesquelles le fluide sous pression peut être alimenté aux éléments de soutien (16) depuis l'une ou depuis l'autre extrémité du cylindre, et dont les deux tubes enveloppe (22) s'étendent respectivement seulement sur une partie de la longueur du cylindre.
